# EUROPÄISCHE PATENTSCHRIFT

(11) **EP 1 272 770 B1**
(45) Veröffentlichungstag und Bekanntmachung des Hinweises auf die Patenterteilung: **23.08.2006**
(21) Anmeldenummer: 01929542.7
(22) Anmeldetag: 11.04.2001
(51) Int. Cl.: F16B 7/14, B23B 31/117, F16D 1/08

(54) **VERBINDUNGSSYSTEM ZUM WIEDERHOLBAREN FESTEN VERBINDEN ZWEIER BAUTEILE IN EINER COAXIALEN ANORDNUNG**
CONNECTION SYSTEM FOR THE REPEATED FIRM CONNECTION OF TWO STRUCTURAL PARTS IN A COAXIAL ARRANGEMENT
SYSTEME D'ASSEMBLAGE RIGIDE ET REPRODUCTIBLE DE DEUX COMPOSANTS DANS UN AGENCEMENT COAXIAL

(30) Priorität: 13.04.2000 DE 10018399
(43) Veröffentlichungstag der Anmeldung: 08.01.2003
(73) Patentinhaber: Wissner, Rolf, Dipl.-Ing., 37079 Göttingen (DE)
(72) Erfinder: Wissner, Rolf, Dipl.-Ing., 37079 Göttingen (DE)
(74) Vertreter: Rehberg Hüppe + Partner
(86) Internationale Anmeldenummer: PCT/EP2001/004168
(87) Internationale Veröffentlichungsnummer: WO 2001/079711

(56) Entgegenhaltungen:
- WO-A-99/65643
- US-A- 4 638 544
- US-A- 5 822 837

## Beschreibung

Die Erfindung bezieht sich auf ein Verbindungssystem zum wiederholbaren festen Verbinden zweier Bauteile in einer bezüglich einer Hauptachse coaxialen Anordnung, bei dem das eine Bauteil während des Verbindungsvorgangs teilweise elastisch so verformbar ist, daß eine wirksame Umfangskontur um die Hauptachse an dem einen Bauteil einer wirksamen Umfangskontur um die Hauptachse an dem anderen Bauteil mit vorgegebenen Spiel entspricht, und bei dem sich das eine Bauteil nach der coaxialen Anordnung der Bauteile ineinander zumindest teilweise elastisch so rückverformt, daß sich eine feste Druckanlage der beiden wirksamen Umfangskonturen ergibt.

Ein Verbindungssystem der eingangs beschriebenen Art kann beispielsweise verwendet werden, um Bohrer, Fräser und andere Werkzeuge für den rotierenden Betrieb auswechselbar mit einer Spannzange zu verbinden, die an einer drehantreibbaren Spindel befestigbar ist. Dabei unterscheidet sich ein Verbindungssystem der eingangs beschriebenen Art von hydraulischen Spannsystemen durch einen deutlich geringeren Aufwand, von thermischen Schrumpfsystemen durch eine deutlich geringere Materialbeanspruchung und von konventionellen mehrteiligen mechanischen Spannsystemen durch die entfallenden hohen Reibungswerte sowie Rundungsungenauigkeiten zwischen konischen Gleitflächenpaaren.

Ein Verbindungssystem der eingangs beschriebenen Art ist aus der DE 195 21 755 C1 bekannt. Dabei weist die ursprüngliche Umfangskontur des einen verformbaren Bauteils innerhalb und außerhalb der Umfangskontur des anderen Bauteils liegende Abschnitte auf. Die Verformung des einen Bauteils erfolgt durch gezielte Einwirkung von radialen Druckkräften auf bestimmte Abschnitte des einen verformbaren Bauteils. Diese bestimmte Abschnitte der Umfangskontur des einen verformbaren Bauteils liegen innerhalb der Umfangskontur des anderen Bauteils, d. h. so, daß sie der coaxialen Anordnung der beiden Bauteile ansich nicht im Wege stehen. Durch die im wesentlichen konstante Umfangslänge der Umfangskontur des einen verformbaren Bauteils beim Verformen werden durch den radialen Kraftangriff damit auch die Abschnitte der Umfangskontur des einen verformbaren Bauteils, die außerhalb der Umfangskontur des anderen Bauteils liegen, elastisch verschoben, und zwar so, daß sie jetzt ebenfalls innerhalb der Umfangskontur des anderen Bauteils liegen. Jetzt kann die coaxiale Anordnung der beiden Bauteile erfolgen. Wenn anschließend die radialen Druckkräfte zurückgenommen werden, formt sich das eine Bauteil elastisch zurück. Weil dabei die ursprünglich innerhalb der Umfangskontur des anderen Bauteils liegenden Abschnitte seiner Umfangskontur nicht an ihren ursprünglichen Platz zurückgelangen können, bauen sich Druckkräfte zwischen diesen Abschnitten der Umfangskontur des einen Bauteils und der Umfangskontur des anderen Bauteils auf, die die feste Druckanlage der beiden wirksamen Umfangskonturen ergeben. Als nachteilig bei dem bekannten Verbindungssystem ist anzusehen, daß das gezielte Aufbringen der radialen Druckkräfte in möglichst rotationssymmetrischer Anordnung zu der Hauptachse der gewünschten coaxialen Anordnung aufwendige Vorrichtungen erfordert. Auch in einer vollautomatisierten Werkzeugmaschine mit Werkzeugwechsler sind üblicherweise keine Vorrichtungen vorhanden, die zum Aufbringen geeigneter radialer Kräfte auf das eine Bauteil in der Lage sind.

Ein ähnliches Verbindungssystem ist aus WO 99/65643 bekannt, die ein Verbindungssystem gemäß dem Oberbegriff des Anpruchs 1 und des Anspruchs 2 offenbart.

Der Erfindung liegt daher die Aufgabe zugrunde, ein Verbindungssystem der eingangs beschriebenen Art aufzuzeigen, daß ohne Vorrichtungen zum Aufbringen radialer Druckkräfte auf das verformbare Bauteil auskommt, die nur durch spezielle Vorrichtungen aufgebracht werden können.

Erfindungsgemäß wird diese Aufgabe durch ein Verbindungssystem mit den Merkmalen des Anspruchs 1 und des Anspruchs 2 gelöst.

Vorteilhafte Ausgestaltungen des neuen Verbindungssystems sind in den Ansprüchen 3 bis 18 beschrieben.

Durch eine Veränderung der Wölbung der Wölbelemente verändert sich die wirksame Umfangskontur an dem einen verformbaren Bauteil. Das heißt, bei geeigneter Wahl der Richtung der Wölbung bewegen sich die Wölbelemente aus einer ursprünglichen Lage außerhalb der Umfangskontur des anderen Bauteils in eine Lage innerhalb dieser Umfangskontur, womit die wirksame Umfangskontur des einen Bauteils der wirksamen Umfangskontur des anderen Bauteils mit vorgegebenem Spiel entspricht. Wenn die äußeren Kräfte, die für die Wölbung der Wölbelemente aufgebracht wurden, zurückgenommen werden, formt sich das eine Bauteil elastisch zurück, d. h., die Wölbelemente wollen in ihre Lage außerhalb der wirksamen Umfangskontur des anderen Bauteils zurückkehren. Da ihnen dies aufgrund des anderen Bauteils nicht möglich ist, bauen sie elastische Kräfte bei ihrer Anlage an dem anderen Bauteil auf, wodurch sich die feste Druckanlage der beiden wirksamen Umfangskonturen ergibt. Die einstückige Ausbildung der Wölbelemente mit dem Sockelelement stellt eine definierte Relativlage des über die Umfangskonturen gespannten anderen Bauteils zu dem Sockelelement sicher.

Die bei dem neuen Verbindungssystem genutzte Wölbung der Wölbelemente kann durch Verändern des Abstands zwischen dem Sockelelement und dem Abschlußelement des einen verformbaren Bauteils erreicht werden. Hierfür sind keine radialen Druckkräfte erforderlich.

Die Wölbelemente können bei dem neuen Verbindungssystem zwischen dem Sockelelement und der wirksamen Umfangskontur maximal eine Windung um die Hauptachse aufweisen. Das heißt, die Grundwölbung der Wölbelemente kann allein durch ihre spiralförmige Anordnung um die Hauptachse gegeben sein. Bei einem spiralförmigen Verlauf der Wölbelemente um die Hauptachse sollte zur Sicherstellung einer hohen Steifigkeit des verformbaren Bauteils zwischen dem Sockelelement und seiner wirksamen Umfangskontur, über die das eine Bauteil an dem anderen Bauteil anliegt, aber nur maximal eine Windung zwischen dem Sockelelement und der wirksamen Umfangskontur durch die Wölbelemente ausgebildet sein.

Wenn die wirksame Umfangskontur des einen Bauteils neben einem oder mehreren Wölbelementen auch durch mindestens eine feste Anlagefläche für das andere Bauteil ausgebildet wird, die sich in starrer Relativanordnung zu dem Sockelelement befindet, hängt die Coaxialität der beiden miteinander verbundenen Bauteile immer von einer genau abgestimmten wirksamen Umfangskontur des anderen Bauteils ab. Dies ist nicht der Fall, wenn die wirksame Umfangskontur des einen Bauteils nur durch Wölbelemente ausgebildet wird, weil durch deren elastische Verformung dann beispielsweise Durchmessertoleranzen des anderen Bauteils kompensiert werden können.

Statt einer von der Hauptachse weg gerichteten Grundwölbung aufgrund eines spiralförmigen Verlaufs um die Hauptachse können die Wölbelemente auch im wesentlichen parallel zu der Hauptachse verlaufen und dabei anderweitig eine zu der Hauptachse hin oder von dieser weg gerichtete Grundwölbung aufweisen. Die Richtung der Grundwölbung wird dabei noch nicht eindeutig dadurch festgelegt, ob die Umfangskontur an dem einen verformbaren Bauteil eine Innenumfangskontur und die Umfangskontur an dem anderen Bauteil einer Außenumfangskontur ist oder umgekehrt. Bei dem neuen Verbindungssystem kann beispielsweise der Abstand zwischen dem Sockelelement und dem Abschlußelement zur Verformung des einen Bauteils sowohl vergrößert als auch verkleinert werden. Entsprechend vergrößert bzw. verkleinert sich eine vorhandene Grundwölbung der Wölbelemente, die ihrerseits bezogen auf die Hauptachse radial nach innen oder radial nach außen gerichtet sein kann, wobei eine spiralförmiger Verlauf der Wölbelemente um die Hauptachse wie eine radial zur Hauptachse nach außen gerichtete Grundwölbung wirkt.

Wenn die Umfangskontur an dem einen Bauteil eine Innenumfangskontur und die Umfangskontur an dem anderen Bauteil eine Außenumfangskontur ist, müssen sich die Wölbelemente aber in jedem Fall beim Verformen des einen Bauteils von der Hauptachse weg elastisch wölben. Weiterhin muß in diesem Fall das Abschlußelement des einen verformbaren Bauteils eine zentrale Einführöffnung für das andere Bauteil aufweisen.

Wenn umgekehrt die Umfangskontur an dem einen Bauteil eine Außenumfangskontur und die Umfangskontur an dem anderen Bauteil eine Innenumfangskontur ist, müssen sich die Wölbelemente beim Verformen des einen Bauteils zu der Hauptachse hin elastisch wölben.

In beiden vorgenannten Fällen kann das elastische Wölben in Abhängigkeit von der jeweiligen Grundwölbung der Wölbelemente sowohl ein Einwölben im Sinne einer Verringerung der Grundwölbung als auch ein Auswölben im Sinne einer Vergrößerung der Grundwölbung sein.

An dem Abschlußelement können quer zu der Hauptachse verlaufende Kraftabstützflächen vorgesehen sein, um das Abschlußelement beim Aufbringen einer linearen Kraft auf das Sockelelement zum Verändern des Abstands zwischen dem Sockelelement und dem Abschlußelement abzustützen. Bei dem neuen Verbindungssystem kann zum Verformen des einen Bauteils direkt eine lineare Kraft in Richtung der Hauptachse aufgebracht werden. Hierzu sind dann die Kraftabstützflächen an dem Abschlußelement vorzusehen. Das Aufbringen einer linearen Kraft ist in aller Regel zur gezielten Änderung der Wölbung der Wölbelemente erforderlich, wenn sich die Wölbelemente nicht um die Hauptachse winden.

Wenn sich die Wölbelemente hingegen um die Hauptachse winden, ist eine Verformung des einen Bauteils sowohl durch Veränderung des Abstands zwischen dem Sockelelement und dem Abschlußelement als auch durch eine Drehbewegung des Abschlußelements gegenüber dem Sockelelement um die Hauptachse erreichbar, wobei beide Bewegungen gekoppelt sind und immer gleichzeitig ablaufen, soweit nicht eine von ihnen bewußt gesperrt wird.

Wenn zum Verformen des einen Bauteils das Abschlußelement relativ zu dem Sockelelement um die Hauptachse verdreht werden soll, sind hierzu Kraftangriffsflächen an dem Abschlußelement vorzusehen.

In einer konkreten Ausführungsform des neuen Verbindungssystems kann das eine Bauteil eine drehantreibbare Halterung für ein Werkzeug sein, das von dem anderen Bauteil ausgebildet wird.

Vorzugsweise weist das eine verformbare Bauteil bei dem neuen Verbindungssystem mindestens drei Wölbelemente in rotationssymmetrischer Anordnung um die Hauptachse auf. Es können auch mehr Wölbelemente vorgesehen sein, um die Rotationssymmetrie weiter zu erhöhen. Mit der Erhöhung der Rotationssymmetrie wird die Möglichkeit des Erreichens einer besonders guten Coaxialität der beiden miteinander verbundenen Bauteile verbessert.

Die Umfangskontur an dem anderen Bauteil kann bei dem neuen Verbindungssystem kreisförmig aber auch mehreckig sein. In Verbindung mit spiralförmig um die Hauptachse verlaufenden Wölbelementen des anderen verformbaren Bauteils, die eine entsprechend mehreckige wirksame Umfangskontur begrenzen, kann auch die mit dem Verändern des Abstands zwischen dem Abschlußelement und dem Sockelelement des einen Bauteils verbundene Relativverdrehung des Abschlußelements gegenüber dem Sockelelement und damit von näher bei dem Abschlußelement liegenden Teilen der wirksamen Umfangskontur gegenüber näher zu dem Sockelelement liegenden Teilen der Umfangskontur des einen Bauteils genutzt werden, um das mehreckige andere Bauteil durch tangentiale elastische Kräfte zwischen den einzelnen Bereichen der wirksamen Umfangskontur zu spannen. Bei einer kreisförmigen Umfangskontur des anderen Bauteils und spiralförmigen Wölbelementen des einen Bauteils kann bei einer Drehmomentübertragung zwischen den beiden Bauteilen die Spiralrichtung der spiralförmigen Wölbelemente um die Hauptachse entweder so ausgelegt werden, daß das Drehmoment zwischen den Bauteilen die Druckanlage der wirksamen Umfangskonturen kräftemäßig erhöht oder aber im Sinne eines Überlastschutzes kräftemäßig abbaut.

Tangentiale Freiräume zwischen den Wölbelementen des einen Bauteils können zur Ausbildung einer geschlossenen Hülse durch im Vergleich zu den Wölbelementen weichelastisches Material zu einer geschlossenen Hülse geschlossen sein. Die Weichelastizität des Materials zum Auffüllen der Freiräume kann allein durch eine geringere Materialstärke als im Bereich der eigentlichen Wölbelemente erreicht werden. Grundsätzlich ist aber bei dem neuen Verbindungssystem darauf zu achten, daß alle Verformungen des einen Bauteils nur im elastischen Bereich erfolgen. Um dies sicher zu stellen, können Anschläge vorgesehen sein, die beispielsweise Veränderungen des Abstands des Abschlußelements von dem Sockelelement oder Verdrehungen des Abschlußelements gegenüber dem Sockelelement auf ein bestimmtes Maß begrenzen. Ein solcher Anschlag für Veränderungen des Abstands zwischen dem Abschlußelement und dem Sockelelement kann beispielsweise von einer starren Hülse ausgebildet werden, die sich über die Wölbelemente von dem Abschlußelement aus bis kurz vor das Sockelelementen erstreckt. Ein Abstand zwischen der Hülse und dem Sockelelement definiert dann die maximale Abstandsänderung des Abschlußelements zu dem Sockelelement hin.

Das eine verformbare Bauteil des neuen Verbindungssystems ist in seiner bevorzugten Ausführungsform insgesamt einstückig ausgebildet. Zur einstückigen Ausbildung kann das eine Bauteil aus dem Vollen spanabnehmend herausgearbeitet, aus einem Rohling kaltverformt und/oder aus eine Schmelze gegossen werden.

Zur Vermeidung von Spannungsspitzen in dem einen verformbaren Bauteil können zwischen den Sockelelementen und den Wölbelementen und/oder zwischen den Wölbelementen und dem Abschlußelement Festkörpergelenke ausgebildet sein. Es ist aber auch möglich, in diesem Bereich auftretende Spannungspitzen durch eine Materialverstärkung abzutragen.

Die Erfindung wird im folgenden anhand von Ausführungsbeispielen näher erläutert und beschrieben. Dabei zeigt
- Figur 1: eine erste Ausführungsform des Verbindungssystems in einer ersten Funktionsstellung,
- Figur 2: das Verbindungssystem gemäß Figur 1 in einer zweiten Funktionsstellung,
- Figur 3: eine zweite Ausführungsform des Verbindungssystems in einer ersten Funktionsstellung,
- Figur 4: das Verbindungssystem gemäß Figur 3 in einer zweiten Funktionsstellung,
- Figur 5: eine dritte Ausführungsform des Verbindungssystems,
- Figur 6: einen Querschnitt durch das eine Bauteil des Verbindungssystems gemäß Figur 5,
- Figur 7: eine weitere Ausführungsform des Verbindungssystems,
- Figur 8: eine weitere Ausführungsform des Verbindungssystems,
- Figur 9: einen Querschnitt durch verschiedene Wölbelemente für das eine Bauteil bei dem neuen Verbindungssystem,
- Figur 10: eine weitere Ausführungsform des Verbindungssystems im Längsschnitt,
- Figur 11: einen Querschnitt durch das Verbindungssystem gemäß Figur 10 und
- Figur 12: eine weitere Ausführungsform des Verbindungssystems im Längsschnitt.

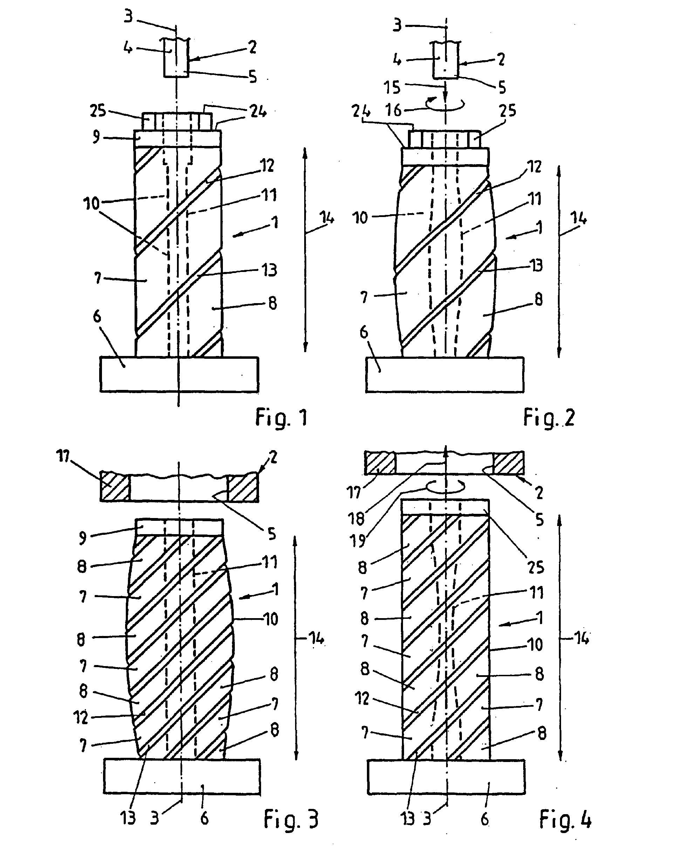

Das in Figur 1 dargestellte Verbindungssystem dient zum Verbinden eines Bauteils 1 mit einem anderen Bauteil 2. Das Verbinden der beiden Bauteile 1 und 2 soll in genauer coaxialer Anordnung zu einer Hauptachse 3 erfolgen. Das eine Bauteil 1 kann beispielsweise eine Halterung für ein Werkzeug sein, das von dem anderen Bauteil 2 ausgebildet wird. Hier weist das Bauteil 2 einen zylindrischen Schaft 4 mit einer zylindermantelförmigen Umfangskontur 5 auf. Das eine Bauteil 1 umfaßt ein Sockelelement 6, zwei Wölbelemente 7 und 8 und ein Abschlußelement 9. Die Wölbelemente 7 und 8 erstrecken sich spiralförmig um die Hauptachse 3 zwischen dem Sockelelement 6 und dem Abschlußelement 9. Eine der Umfangskontur 5 des anderen Bauteils 2 zugeordnete Umfangskontur 10 wird von einer Bohrung 11 ausgebildet, die durch das Abschlußelement 9 hindurch in das Bauteil 1 eingebracht ist. Das Bauteil 1 ist dabei insgesamt einstückig. Das heißt, die Wölbelemente 7 und 8 sind im wesentlichen durch Einbringen der Bohrung 11 und von spiralförmigen Nuten 12 und 13 zwischen den Wölbelementen 7 und 8 ausgebildet. Dabei greifen die Nuten 12 und 13 nicht bis zu der Bohrung 11 durch. Vielmehr ist dort Material stehen gelassen, das eine geschlossene Hülse um die Bohrung 11 ausbildet. Der Durchmesser der Bohrung 11 ist zwischen dem Bereich, in dem die Umfangskontur 10 an dem einen Bauteil 1 ausgebildet ist, und ihrer Mündung an dem Abschlußelement 9 etwas aufgeweitet. Diese Aufweitung ist in Figur 1 übertrieben dargestellt. In der Funktionsstellung gemäß Figur 1, die den Grundzustand des Bauteils 1 wiedergibt, ist der Durchmesser der Bohrung 11 an ihrem Eingang an dem Abschlußelement 9 zwar so groß, daß das andere Bauteil 2 eingeführt werden könnte. Im Bereich der Umfangskontur 10 ist der Durchmesser der Bohrung 11 aber zunächst kleiner als der Durchmesser des Schafts 5. Durch Überführen des Bauteils 1 in die Funktionsstellung gemäß Figur 2 wird der Durchmesser der Bohrung 11 im Bereich der Umfangskontur 10 aufgeweitet. Die Aufweitung ergibt sich durch Auswölbung der Wölbelemente 7 und 8 weg von der Hauptachse 3. Diese Auswölbung tritt bei einer Verkürzung eines Abstands 14 zwischen dem Sockelelement 6 und dem Abschlußelement 9 auf. Diese Verkürzung kann direkt durch eine lineare Kraft in Richtung eines Pfeils 15 bewirkt werden. Aufgrund der spiralförmigen Form der Wölbelemente 7 und 8 geht eine Verkürzung des Abstands zwischen dem Sockelelement 6 und dem Abschlußelement 9 aber immer auch mit einer Drehbewegung des Abschlußelements 9 relativ zu dem Sockelelement 6 um die Hauptachse 3 einher, so daß die Verringerung des Abstands 14 auch durch ein Drehmoment in Richtung des Drehpfeils 16 eingeleitet werden kann. Für den Angriff einer linearen Kraft an dem einen Bauteil 1 ist eine Kraftabstützfläche 24 vorgesehen, für denjenigen des Drehmoments sind es Kraftübertragungsflächen 25. Bei dem jetzt aufgeweiteten Durchmesser im Bereich der Umfangskontur 10 des Bauteils 1 kann das Bauteil 2 mit dem Schaft 4 ganz in die Bohrung 11 eingeführt werden, bis die Umfangskonturen 5 und 10 ineinander liegen. Wenn dann die Kraft bzw. das Drehmoment weggenommen wird, die bzw. das zu der Verringerung des Abstands 14 geführt hat, versuchen die Wölbelemente 7 und 8 ihre elastische Verformung abzubauen. Dabei legt sich die Umfangskontur 10 unter Druck an die Umfangskontur 5 an. Diese Druckanlage hält das andere Bauteil 2 in dem einen Bauteil 1 fest. Die so erhaltene coaxiale Verbindung relativ zu der Hauptachse 3 kann wieder aufgehoben werden, wenn der Abstand 14 zwischen dem Abschlußelement 9 und dem Sockelelement 6 unter Auswölbung der Wölbelemente 7 und 8 erneut verkürzt wird. Trotz der spiralförmigen Anordnung der Wölbelemente 7 und 8 um die Hauptachse 3 ergibt sich hierdurch keine Instabilität des einen Bauteils 1. Dabei ist zu berücksichtigen, daß die Steifigkeit der Wölbelemente 1 trotz ihrer grundsätzlichen elastischen Verformbarkeit bei Verringerung des Abstands 14 relativ hoch ist und daß jedes der Wölbelemente zwischen dem Sockelelement 6 und dem Abschlußelement 9 gerade etwas mehr als eine volle Windung um die Hauptachse 3 aufweist. Zwischen dem Sockelelement 6 und dem Bereich der relevanten Umfangskontur 10 an dem einen Bauteil 1 liegt weniger als eine Windung bei jedem der Wölbelemente 7 und 8 vor.

In den Figuren 3 und 4 ist eine Ausführungsform des Verbindungssystems dargestellt, bei dem die relevante Umfangskontur 5 des Bauteils 2 nicht innerhalb der Umfangskontur 10 des Bauteils 1 anzuordnen ist, sondern umgekehrt. Das heißt, die Umfangskontur 5 bei diesem Bauteil 2 ist eine Innenumfangskontur und wird von einem Hohlzylinderabschnitt 17 ausgebildet. Entsprechend ist die relevante Umfangskontur 10 an dem einen Bauteil 1 eine Außenumfangskontur und wird an dessen Außenumfang ausgebildet, der in der in Figur 3 dargestellten Grundform leicht tonnenförmig ist. Die Anordnung der Wölbelemente 7 und 8 mit den dazwischenliegenden Nuten 12 und 13 und der Bohrung 11 ist dabei im Prinzip die gleiche wie bei der Ausführungsform des Verbindungssystems gemäß den Figuren 1 und 2. Allerdings sind die Wölbelemente schmaler und steiler angeordnet, wobei sie selbst zwischen dem Sockelelement 6 und dem Abschlußelement 9 jeweils keine ganze Windung um die Achse 3 ausbilden. Die Anzahl der Wölbelemente 7 und 8 gemäß der Ausführungsform der Figuren 3 und 4 beträgt 8. Wenn auf das eine Bauteil 1 eine Zugkraft in Richtung eines Pfeils 18 gemäß Figur 4 oder ein Drehmoment in Richtung eines Drehpfeils 19 gemäß Figur 4 aufgebracht wird, vergrößert sich der Abstand 14 zwischen dem Sockelelement 6 und dem Abschlußelement 9, wobei die Tonnenform des Umfangs der Wölbelemente 7 und 8 zurückgeht. Das heißt, die Umfangskontur 10 verjüngt sich und der Hohlzylinderabschnitt 17 des anderen Bauteils 2 kann auf die Wölbelemente 10 aufgeschoben werden. Wenn danach die Kraft bzw. das Drehmoment, die bzw. das die Verlängerung des Abstands 14 bewirkt hat, zurückgenommen wird, legen sich die Wölbelemente 7 und 8 an die Umfangskontur 5 im Inneren des Hohlzylinderabschnitts 17 elastisch an.

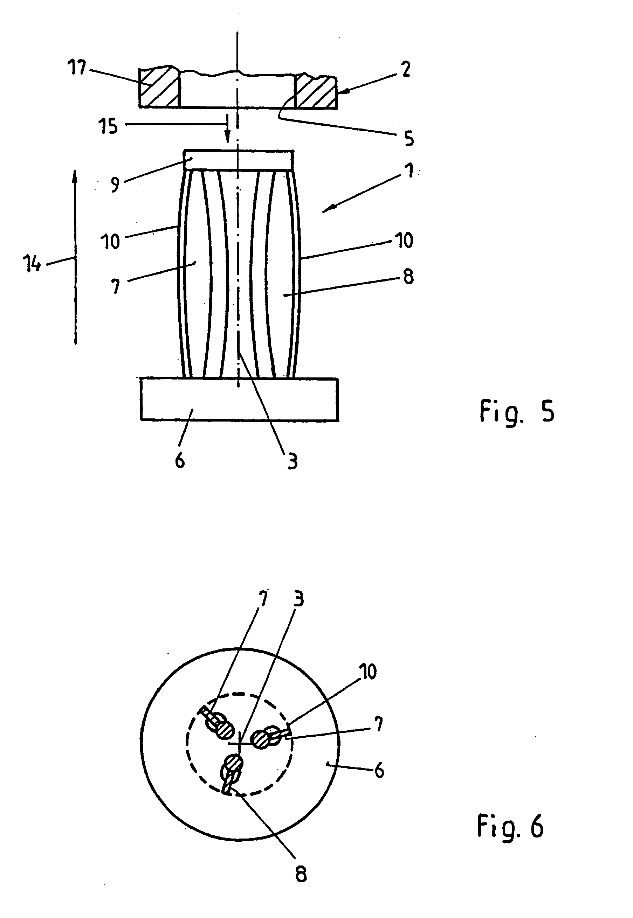

Eine weitere Ausführungsform des Verbindungssystems, bei dem ein Hohlzylinderabschnitt 17 auf den Wölbelementen 7 und 8 angeordnet wird, ist in den Figuren 5 und 6 dargestellt. Hier verlaufen die Wölbelemente ohne Windung zwischen dem Sockelelement 6 und dem Abschlußelement 9 des einen Bauteils 1. Sie sind dabei so ausgebildet, daß ihr Grundwölbung in statischer Hinsicht nach innen zu der Hauptachse 3 gerichtet ist, obwohl die relevante Umfangskontur 10 in der Grundstellung gemäß Figur 5 tonnenförmig nach außen über die entsprechende Umfangskontur 5 des anderen Bauteils 2 vorsteht. Beim Verringern des Abstands 14 in Richtung des Pfeils 15 jedoch wölben sich die Wölbelemente 7 und 8 zu der Hauptachse 3 ein, womit die Tonnenform der Umfangskontur 10 verlorengeht, so daß dann der Hohlzylinderabschnitt 17 des Bauteils 2 auf die Wölbelemente 7 und 8 aufgeschoben werden kann. Der Querschnitt gemäß Figur 6 erläutert, warum die Wölbelemente 7 und 8 trotz der Tonnenform der relevanten Umfangskontur 10 eine zu der Hauptachse 3 gerichtete Grundwölbung aufweisen. Diese Grundwölbung ist bezüglich des Verlaufs des Schwerpunkts des Materialquerschnitts senkrecht zu der Hauptachse 3 gegeben. Im übrigen ist die Anordnung der Wölbelemente 7 und 8 gemäß den Figuren 5 und 6 mit einem inneren Anschlag versehen, der die Verringerung des Abstands 14 begrenzt, sobald die Wölbelemente 7 und 8 im Bereich der Hauptachse 3 aneinander zur Anlage kommen.

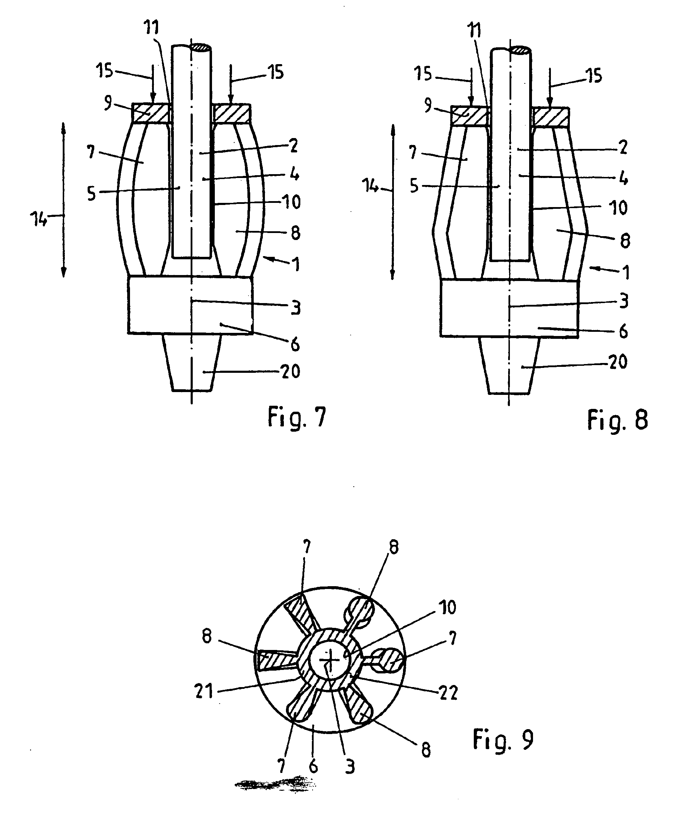

Figur 7 zeigt eine weitere Ausführungsform des neuen Verbindungssystems mit in Richtung die Hauptachse 3 zwischen dem Sockelelement 6 und dem Abschlußelement 9 ungewundenen Wölbelementen 7 und 8. Hier ist das Verbindungssystem aber wieder zum Spannen eines zylinderförmigen Schafts 4 innerhalb des einen Bauteils 1 vorgesehen. Dabei ist die Funktionsweise dieselbe wie bei der Ausführungsform gemäß den Figuren 5 und 6, nur daß hier die Wölbelemente 7 und 8 eine nach außen von der Hauptachse 3 weg gerichtete Grundwölbung aufweisen, die sie bei Verringerung des Abstands 14 durch Kraftaufwendung in Richtung der Pfeile 15 vergrößern. Hierdurch weitet sich die Umfangskontur 10 im Inneren des Bauteils 1 auf. Im übrigen ist das Sockelelement 6 hier als sogenannte Spannzange 20 zur Befestigung des Bauteils 1 an einer nicht dargestellten drehantreibbaren Spindel ausgebildet.

Die Ausführungsform des Verbindungssystems gemäß Figur 8 unterscheidet sich von derjenigen gemäß Figur 7 nur durch die Form der Wölbelemente 7 und 8.

Unterschiedliche Wölbelemente 7 und 8 sind auch in Figur 9 skizziert. Alle Formen entsprechen dabei einer von der Hauptachse 3 weg gerichtete Grundwölbung der Wölbelemente 7 und 8. Wieder ergibt sich die Grundwölbung durch den Verlauf des Schwerpunkts der Materialquerschnitte entlang der Hauptachse 3 zwischen dem Sockelelement 6 und dem Abschlußelement 9. Figur 9 zeigt weiter, daß die Wölbelemente 7 und 8 nach innen in eine geschlossene Buchse 21 um die Hauptachse 3 übergehen, die die Umfangskontur 10 ausbildet. Dabei ist der jeweilige Freiraum zwischen den Wölbelementen 7 und 8 durch dünneres, d. h. relativ gesehen elastischeres Material 22 geschlossen.

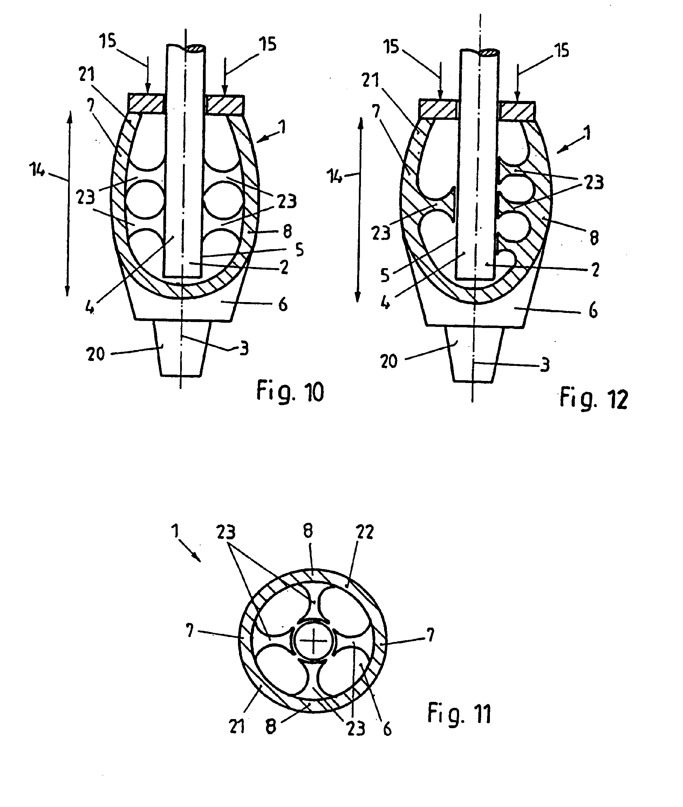

Die Ausführungsform des neuen Verbindungssystems gemäß den Figuren 10 und 11 unterscheidet sich von derjenigen gemäß den vorangehenden Figuren 7 bis 9 dadurch, daß die Wölbelemente im Bereich ihres größten Umfangs durch elastisches Material 22 zu einer geschlossenen Hülse 21 ergänzt sind. Von dieser Hülse 21 stehen Haltestempel 23 für das andere Bauteil 2 in dem einen Bauteil 1 nach innen ab. Jedes Wölbelement 7 und 8 wird dabei von einem Bereich der Hülse 21 und den daran angesetzten Stempeln 23 ausgebildet. Die Funktion des Bauteils 1 entspricht im Ergebnis wieder vollständig derjenigen der Ausführungsformen des neuen Verbindungssystems gemäß den Figuren 7 bis 9. Dies gilt auch für die Ausführungsform gemäß Figur 12, bei der die Stempel 23 nicht jeweils in spiegelsymmetrischer Anordnung bezüglich der Hauptachse 3 angeordnet sind.

Die voranstehend beschriebenen Ausführungsformen des neuen Verbindungssystems sind jeweils auch umkehrbar, d. h. ein innen spannendes Bauteil 1 kann in ein außen spannendes Bauteil 1 umgewandelt werden, indem entweder die Richtung der Grundwölbung bezüglich der Hauptachse 3 geändert wird oder indem die Änderungsrichtung des Abstands 14 zwischen dem Sockelelement 6 und dem Abschlußelement 9 umgekehrt wird. Wenn beide Variationen gleichzeitig vorgenommen werden, ergibt sich aus einem innen spannenden Bauteil wieder ein innen spannendes und aus einem außen spannenden Bauteil wieder ein außen spannendes.

### BEZUGSZEICHENLISTE

- 1 -: Bauteil
- 2 -: Bauteil
- 3 -: Hauptachse
- 4 -: Schaft
- 5 -: Umfangskontur
- 6 -: Sockelelement
- 7 -: Wölbelement
- 8 -: Wölbelement
- 9 -: Abschlußelement
- 10 -: Umfangskontur
- 11 -: Bohrung
- 12 -: Nut
- 13 -: Nut
- 14 -: Abstand
- 15 -: Pfeil
- 16 -: Drehpfeil
- 17 -: Hohlzylinderabschnitt
- 18 -: Pfeil
- 19 -: Drehpfeil
- 20 -: Spannzange
- 21 -: Hülse
- 22 -: Material
- 23 -: Stempel
- 24 -: Kraftabstützfläche
- 25 -: Kraftübertragungsfläche

## Patentansprüche

1. Verbindungssystem zum wiederholbaren festen Verbinden zweier Bauteile (1,2) mit zwei wiederholt in einer bezüglich einer Hauptachse coaxialen Anordnung fest verbindbaren Bauteilen bei dem das eine Bauteil während des Verbindungsvorgangs zeitweise elastisch so verformbar ist, daß eine wirksame Umfangskontur um die Hauptsache an dem einen Bauteil einer wirksamen Umfangskontur um die Hauptachse an dem anderen Bauteil mit vorgegebenem Spiel entspricht, und bei dem sich das eine Bauteil nach der coaxialen Anordnung der beiden Bauteile ineinander zumindest teilweise elastisch so rückverformt, daß sich eine feste Druckanlage der beiden wirksamen Umfangskonturen ergibt, wobei die Umfangskontur an dem einen Bauteil eine Innenumfangskontur und die Umfangskontur an dem anderen Bauteil eine Außenumfangskontur ist, **dadurch gekennzeichnet, daß** das eine verformbare Bauteil (1) ein Sockelelement (6), ein Abschlußelement (9) und mindestens ein Wölbelement (7, 8) aufweist, wobei jedes Wölbelement (7, 8) einen Teil der wirksamen Umfangskontur (10) an dem einen Bauteil (1) ausbildet, wobei jedes Wölbelement (7, 8) einstückig mit dem Sockelelement (6) ausgebildet ist, wobei sich jedes Wölbelement (7, 8) längs der Hauptachse (3) von dem Sockelelement (6) über die wirksame Umfangskontur (10) hinweg bis zu dem Abschlußelement (9) erstreckt und wobei sich jedes Wölbelement (7, 8) beim Verformen des einen Bauteils (1) von der Hauptachse (3) weg elastisch wölbt und wobei das Abschlußelement (9) eine zentrale Einführöffnung für das andere Bauteil (2) aufweist.

2. Verbindungssystem zum wiederholbaren festen Verbinden zweier Bauteile (1,2) mit zwei wiederholt in einer bezüglich einer Hauptachse coaxialen Anordnung fest verbindbaren Bauteilen, bei dem as eine Bauteil während des Verbindungsvorgangs zeitweise elastisch so verformbar ist, daß eine wirksame Umfangskontur um die Hauptsache an dem einen Bauteil einer wirksamen Umfangskontur um die Hauptachse an dem anderen Bauteil mit vorgegebenem Spiel entspricht, und bei dem sich das eine Bauteil nach der coaxialen Anordnung der beiden Bauteile ineinander zumindest teilweise elastisch so rückverformt, daß sich eine feste Druckanlage der beiden wirksamen Umfangskonturen ergibt, wobei die Umfangskontur an dem einen Bauteil eine Außenumfangskontur und die Umfangskontur an dem anderen Bauteil eine Innenumfangskontur ist, **dadurch gekennzeichnet, daß** das eine verformbare Bauteil (1) ein Sockelelement (6), ein Abschlußelement (9) und mindestens ein Wölbelement (7, 8) aufweist, wobei jedes Wölbelement (7, 8) einen Teil der wirksamen Umfangskontur (10) an dem einen Bauteil (1) ausbildet, wobei jedes Wölbelement (7, 8) einstückig mit dem Sockelelement (6) ausgebildet ist, wobei sich jedes Wölbelement (7, 8) längs der Hauptachse (3) von dem Sockelelement (6) über die wirksame Umfangskontur (10) hinweg bis zu dem Abschlußelement (9) erstreckt und wobei sich jedes Wölbelement (7, 8) beim Verformen des einen Bauteils (1) zu der Hauptachse (3) hin elastisch wölbt.

3. Verbindungssystem nach Anspruch 1 oder 2, **dadurch gekennzeichnet, daß** die wirksame Umfangskontur (10) ausschließlich durch die Wölbelemente (7, 8) ausgebildet ist.

4. Verbindungssystem nach einem der Ansprüche 1 bis 3, **dadurch gekennzeichnet, daß** tangentiale Freiräume zwischen mehreren Wölbelementen (7, 8) zur Ausbildung einer geschlossenen Hülse (21) durch im Vergleich zu den Wölbelementen (7, 8) weichelastisches Material (22) geschlossen sind.

5. Verbindungssystem nach einem der Ansprüche 1 bis 4, **dadurch gekennzeichnet, daß** jedes Wölbelement (7, 8) zwischen dem Sockelelement (6) und der wirksamen Umfangskontur (10) maximal eine Windung um die Hauptachse (3) ausbildet.

6. Verbindungssystem nach einem der Ansprüche 1 bis 5, **dadurch gekennzeichnet, daß** sich jedes Wölbelement (7, 8) beim Verändern des Abstands (14) zwischen dem Sockelelement (6) und dem Abschlußelement (9) elastisch wölbt und daß quer zu der Hauptachse (3) verlaufende Kraftabstützflächen (24) an dem Abschlußelement (9) vorgesehen sind, um das Abschlußelement (9) beim Aufbringen einer linearen Kraft auf das Sockelelement (6) zum Verformen des einen Bauteils (1) abzustützen.

7. Verbindungssystem nach einem der Ansprüche 1 bis 6, **dadurch gekennzeichnet, daß** sich jedes Wölbelement (7, 8) um die Hauptachse (3) windet und daß Kraftangriffsflächen (25) an dem Abschlußelement (9) vorgesehen sind, um das Abschlußelement (9) zum Verformen des einen Bauteils (1) relativ zu dem Sockelelement (6) um die Hauptachse (3) zu verdrehen.

8. Verbindungssystem nach einem der Ansprüche 1 bis 7, **dadurch gekennzeichnet, daß** das eine Bauteil (1) eine drehantreibbare Halterung für ein Werkzeug ist, das von dem anderen Bauteil (2) ausgebildet wird.

9. Verbindungssystem nach einem der Ansprüche 1 bis 8, **dadurch gekennzeichnet, daß** mindestens drei Wölbelemente (7, 8) in rotationssymmetrischer Anordnung um die Hauptachse (3) vorgesehen sind.

10. Verbindungssystem nach einem der Ansprüche 1 bis 9, **dadurch gekennzeichnet, daß** das Bauteil (1) aus dem Sockelelement (6), jedem Wölbelement (7, 8) und dem Abschlußelement (9) einstückig ausgebildet ist und daß zwischen dem Sockelelement (6) und jedem Wölbelement (7, 8) und/oder zwischen jedem Wölbelement (7, 8) und dem Abschlußelement (9) Festkörpergelenke vorgesehen sind.

## Claims

1. Connection system for repeatedly firmly connecting two structural parts (1, 2), the connection system having two structural parts which can be repeatedly firmly connected in a coaxial arrangement with regard to a main axis, wherein the one structural part can be temporarily elastically deformed during the connection process in such a way that an effective circumference contour about the main axis at the one structural part corresponds to an effective circumference contour about the main axis at the other structural part with a predetermined play, and wherein the one structural part at least partially elastically returns to its original shape after coaxially arranging the structural parts one within the other so that there is a firm pressure abutment of both effective circumference contours, the circumference contour at the one structural part being a inner circumference contour and the circumference contour at the other structural part being an outer circumference contour, **characterized in that** the one deformable structural part (1) comprises a base element (6), a termination element (9) and at least one camber element (7, 8), each camber element (7, 8) providing a part of the effective circumference contour (10) at the one structural part (1), each camber element (7, 8) being made in one part with the base element (6), each camber element (7, 8) extending along the main axis (3) from the base element (6) over the effective circumference contour (10) up to the termination element (9), and each camber element (7, 8) elastically cambering away from the main axis (3) upon deforming the one structural part (1), and the termination element (9) having a central insertion opening for the other structural part (2).

2. Connection system for repeatedly firmly connecting two structural parts (1, 2), the connection system having two structural parts which can be repeatedly firmly connected in a coaxial arrangement with regard to a main axis, wherein the one structural part can be temporarily elastically deformed during the connection process in such a way that an effective circumference contour about the main axis at the one structural part corresponds to an effective circumference contour about the main axis at the other structural part with a predetermined play, and wherein the one structural part at least partially elastically returns to its original shape after coaxially arranging the structural parts one within the other so that there is a firm pressure abutment of both effective circumference contours, the circumference contour at the one structural part being an outer circumference contour and the circumference contour at the other structural part being an inner circumference contour, **characterized in that** the one deformable structural part (1) comprises a base element (1), a termination element (9) and at least one camber element (7, 8), each camber element (7, 8) providing a part of the effective circumference contour (10) at the one structural part (1), each camber element (7, 8) being made in one part with the base element (6), each camber element (7, 8) extending along the main axis (3) from the base element (6) over the effective circumference contour (10) up to the termination element (9), and each camber element (7, 8) elastically cambering towards the main axis (3) upon deforming the one structural part (1).

3. Connection system according to claim 1 or 2, **characterized in that** the effective circumference contour (10) is provided by the camber elements (7, 8) only.

4. Connection system according to claim 1 to 3, **characterized in that** tangential spaces between several camber elements (7, 8) are closed by a material (22), which is soft elastic as compared to the camber elements (7, 8), for forming a closed sleeve (21).

5. Connection system according to claims 1 to 4, **characterized in that** each camber elements (7, 8) displays at maximum one winding about the main axis (3) between the base element (6) and the effective circumference contour (10).

6. Connection system according to claims 1 to 5, **characterized in that** each camber element (7, 8) elastically cambers upon varying the distance (14) between the base element (6) and the termination element (9), and that force supporting faces (24) extending normal to the main axis (3) are provided at the termination element (9) for supporting the termination element (9) in applying a linear force onto the base element (6) for deforming the one structural part (1).

7. Connection system according to claims 1 to 6, **characterized in that** each camber element (7, 8) winds about the main axis (3), and that force engagement faces (25) are provided at the termination element (6) for turning the termination element (9) about the main axis (3) with regard to the base element (6) for deforming the one structural part (1).

8. Connection system according to any of the claims 1 to 7, **characterized in that** the one structural part (1) is a rotationally driven mount for a tool, which is formed by the other structural part (2).

9. Connection system according to any of the claims 1 to 8, **characterized in that** at least three camber elements (7, 8) are provided in a rotational symmetric arrangement around the main axis (3).

10. Connection system according to any of the claims 1 to 9, **characterized in that** the structural part (1) consisting of the base element (6), each camber element (7, 8) and the termination element (9) are one part, and that solid state joints are provided between the base element (6) and each camber element (7, 8) and/or between each camber element (7, 8) and the termination element (9).

## Revendications

1. Dispositif de liaison pour la liaison fixe reproductible de deux composants (1, 2) avec deux composants pouvant être reliés de façon fixe et répétée, dans un agencement coaxial par rapport à un axe principal, dans lequel l'un des composants peut être déformé temporairement de manière élastique pendant l'opération de liaison de telle sorte qu'un contour périphérique efficace autour de l'axe principal sur un composant correspond à un contour périphérique efficace autour de l'axe principal sur l'autre composant avec un jeu prédéfini, et sur lequel l'un des composants revient de lui-même au moins partiellement de manière élastique après l'agencement coaxial des deux composants l'un dans l'autre, qu'on obtient un appui de pression fixe des deux contours périphériques efficaces, le contour de pression étant sur l'un des composants un contour périphérique intérieur et le contour périphérique étant un contour périphérique extérieur sur l'autre composant, **caractérisé en ce qu'**un composant (1) déformable présente un élément de socle (6), un élément de fermeture (9) et au moins un élément de courbure (7, 8), chaque élément de courbure (7, 8) formant une partie du contour périphérique (10) efficace sur l'un des composants (1), chaque élément de courbure (7, 8) étant conçu d'une seule pièce avec l'élément de socle (6), chaque élément de courbure (7, 8) s'étendant le long de l'axe principal (3) depuis l'élément de socle (6) sur le contour périphérique (10) efficace jusqu'à l'élément de fermeture (9) et chaque élément de courbure (7, 8) se courbant de façon élastique lors de la déformation de l'un des composants (1) à partir de l'axe principal (3) et l'élément de fermeture (9) présentant une ouverture d'introduction centrale pour l'autre composant (2).

2. Dispositif de liaison pour liaison fixe reproductible de deux composants (1, 2) avec deux composants pouvant être reliés de façon fixe et répétée, dans un agencement coaxial par rapport à un axe principal, dans lequel l'un des composants peut être déformé temporairement de manière élastique pendant l'opération de liaison de telle sorte qu'un contour périphérique efficace autour de l'axe principal sur l'un des composants correspond à un contour périphérique efficace autour de l'axe principal sur l'autre composant avec un jeu prédéfini, et sur lequel l'un des composants revient de lui-même au moins en partie de manière élastique après l'agencement coaxial des deux composants l'un dans l'autre de telle sorte qu'on obtient un appui de pression fixe des deux contours périphériques efficaces, le contour périphérique étant un contour périphérique extérieur sur l'un des composants et le contour périphérique sur l'autre composant étant un contour périphérique intérieur, **caractérisé en ce qu'**un composant (1) déformable présente un élément de socle (6), un élément de fermeture (9) et au moins un élément de courbure (7, 8), chaque élément de courbure (7, 8) formant une partie du contour périphérique (10) efficace sur l'un des composants (1), chaque élément de courbure (7, 8) étant réalisé d'une seule pièce avec l'élément de socle (6), chaque élément de courbure (7, 8) s'étendant le long de l'axe principal (3) depuis l'élément de socle (6) sur le contour périphérique efficace (10) jusqu'à l'élément de fermeture (9), et chaque élément de courbure (7, 8) se courbant de façon élastique lors de la déformation de l'un des composants (1) en direction de l'axe principal (3).

3. Dispositif de liaison selon la revendication 1 ou 2, **caractérisé en ce que** le contour périphérique (10) efficace est réalisé exclusivement par les éléments de courbure (7, 8).

4. Dispositif de liaison l'une quelconque des revendications 1 à 3, **caractérisé en ce que** des espaces tangentielles entre plusieurs éléments de courbure (7, 8) sont fermés pour réaliser une douille (21) fermée par du matériau (22) élastique et souple par comparaison aux éléments de courbure (7, 8).

5. Dispositif de liaison selon l'une quelconque des revendications 1 à 4, **caractérisé en ce que** chaque élément de courbure (7, 8) forme entre l'élément de socle (6) et le contour périphérique (10) efficace au maximum une spire autour de l'axe principal (3).

6. Dispositif de liaison selon l'une quelconque des revendications 1 à 5, **caractérisé en ce que** chaque élément de courbure (7, 8) se courbe de façon élastique lors de la modification de la distance (14) entre l'élément de socle (6) et l'élément de fermeture (9), et **en ce que** des faces d'appui de force (24) agencées transversalement à l'axe principal (3) sont prévues sur l'élément de fermeture (9), afin de soutenir l'élément de fermeture (9) lors de l'application d'une force linéaire sur l'élément de socle (6) pour la déformation de l'un des composants (1).

7. Dispositif de liaison selon l'une quelconque des revendications 1 à 6, **caractérisé en ce que** chaque élément de courbure (7, 8) tourne autour de l'axe principal (3), et **en ce que** des faces d'application de force (25) sont prévues sur l'élément de fermeture (9), afin de faire tourner l'élément de fermeture (9) pour déformer l'un des composants (1) par rapport à l'élément de socle (6) autour de l'axe principal (3).

8. Dispositif de liaison selon l'une quelconque des revendications 1 à 7, **caractérisé en ce que** l'un des composants (1) est un support pouvant être entraîné par rotation pour un outil qui est formé par l'autre composant (2).

9. Dispositif de liaison selon l'une quelconque des revendications 1 à 8, **caractérisé en ce qu'**au moins trois éléments de courbure (7, 8) sont prévus dans un agencement symétrique en rotation autour de l'axe principal (3).

10. Dispositif de liaison selon l'une quelconque des revendications 1 à 9, **caractérisé en ce que** le composant (1) est réalisé d'une seule pièce à partir de l'élément de socle (6), de chaque élément de courbure (7, 8) et l'élément de fermeture (9), et **en ce que** des articulations solides sont prévues entre l'élément de socle (6) et chaque élément de courbure (7, 8) et/ou entre chaque élément de courbure (7, 8) et l'élément de fermeture (9).
